# EUROPÄISCHE PATENTSCHRIFT

(11) **EP 2 558 363 B1**
(45) Veröffentlichungstag und Bekanntmachung des Hinweises auf die Patenterteilung: **01.11.2017**
(21) Anmeldenummer: 11712540.1
(22) Anmeldetag: 31.03.2011
(51) Int. Cl.: B64C 9/24

(54) **HOCHAUFTRIEBSSYSTEM FÜR EIN FLUGZEUG**
HIGH-LIFT SYSTEM FOR AN AIRCRAFT
SYSTÈME HYPERSUSTENTATEUR POUR AVION

(30) Priorität: 13.04.2010 US 323424 P; 13.04.2010 DE 102010014792
(43) Veröffentlichungstag der Anmeldung: 20.02.2013
(73) Patentinhaber: Airbus Operations GmbH, 21129 Hamburg (DE)
(72) Erfinder: SCHRÖDER, Karsten, 21244 Buchholz (DE)
(74) Vertreter: LKGLOBAL Lorenz & Kopf PartG mbB Patentanwälte
(86) Internationale Anmeldenummer: PCT/EP2011/055001
(87) Internationale Veröffentlichungsnummer: WO 2011/128211

(56) Entgegenhaltungen:
- EP-A1- 1 338 506
- WO-A2-2011/069887
- US-A- 3 917 193

## Beschreibung

### TECHNISCHES GEBIET

Die Erfindung betrifft ein Hochauftriebssystem für ein Flugzeug, aufweisend mindestens eine an einem Tragflügel angeordnete Auftriebsklappe und mindestens eine Klappen-Verstellmechanik zum Bewegen der Auftriebsklappe zwischen einer eingefahrenen und mindestens einer ausgefahrenen Stellung gegenüber dem Tragflügel.

### HINTERGRUND DER ERFINDUNG

Aus der Forderung nach einer möglichst hohen Reisefluggeschwindigkeit und gleichzeitig einer möglichst geringen Start- und Lande-Geschwindigkeit ergibt sich bei modernen Verkehrsflugzeugen die Notwendigkeit von Hochauftriebssystemen, die während Starts und Landungen zur deutlichen Erhöhung des Auftriebsbeiwerts aktiviert werden können. Dies geschieht im Allgemeinen durch auftriebserhöhende Klappen, die in die Luftströmung des Flugzeugs ausgelenkt werden. Besonders verbreitet werden unter anderem eine Fülle unterschiedlicher Vorflügel, z.B. Nasen-Spaltklappen ("extensible slat") oder Vorderkantenklappen, z.B. Krüger-Klappen ("Krüger flap") eingesetzt, die zum Tragflügel bewegbar angeordnet sind. Im folgenden werden Vorflügel und Klappen der Einfachheit halber allgemein als "Auftriebsklappen" bezeichnet.

In einer oder mehreren ausgefahrenen Stellungen können als Vorflügel ausgeführte Auftriebsklappen von der Vorderkante des Tragflügels beabstandet bzw. versetzt sein und bilden dadurch einen Spalt zu der Vorderkante des Tragflügels aus. Durch den Spalt gerät aus der Anströmung des Flugzeugs eine energiereiche Luftströmung auf die Profiloberseite des Tragflügels, um dort den Strömungsabriss zu größeren Anstellwinkeln hin zu verschieben. Auftriebsklappen können je nach Bauform mit oder ohne Bildung eines Spalts in die Anströmung des Flugzeugs ausgelenkt werden und vergrößern sowohl die Fläche des Tragflügels als auch dessen Krümmung.

Damit die Kontur des Tragflügels in einer eingefahrenen Stellung der Auftriebsklappen eine für den Reiseflug optimierte Kontur aufweist, weist der Tragflügel Vertiefungen, Ausnehmungen, Einbuchtungen oder dergleichen zum Aufnehmen der Auftriebsklappen auf, wobei die Form der Auftriebsklappen und der Vertiefungen des Tragflügels aneinander angepasst sind. Bei eingefahrenen Auftriebsklappen ergibt die Kombination aus Tragflügel und Auftriebsklappen demnach nach außen die Reiseflugkontur. Bei einer Auftriebsklappe, die etwa um eine Achse im Bereich der Tragflügelvorderkante drehbar gelagert ist, ergibt ein Abschnitt einer Reiseflugkontur der Unterseite der Tragfläche die obere Kontur der Auftriebsklappe im ausgefahrenen Zustand.

Auftriebsklappen sind üblicherweise starr und weisen einen inneren Strukturaufbau auf. Die Ausformung der in einer Verstauposition zum Tragflügel gerichteten Fläche der Auftriebsklappe wird im Wesentlichen durch diesen inneren Strukturaufbau bestimmt und gibt demnach die Größe der entsprechenden Vertiefung für die Verstauung in oder an dem Tragflügel vor. Die Auftriebsklappen weisen häufig eine abnehmende Strukturdicke auf, so dass die Vertiefung in dem Tragflügel damit korrespondierend ausgestaltet ist.

In DE 10 2006 053 259 A1 und WO 2008/058695 A1 wird ein Hochauftriebssystem für einen Tragflügel eines Flugzeugs vorgestellt, bei dem Auftriebsklappen zur Erhöhung des Auftriebs aus einer eingefahrenen in ausgefahrene Positionen bringbar sind, wobei ein Spalt zwischen den Hochauftriebsklappen und dem Tragflügel unabhängig von der Stellung der Hochauftriebsklappen geöffnet oder geschlossen werden kann. Dadurch ist das wahlweise Erreichen eines verbesserten Maximalauftriebsbeiwerts oder eines verbesserten Gleitverhältnisses mit geringerer Lärmentwicklung möglich.

EP 1 338 506 A1 offenbart einen Flugzeugflügel mit einem Vorflügel und einer Krüger-Klappe, die gleichzeitig mit einem gemeinsamen Antrieb ausgefahren werden.

US 39 17 193 zeigt eine Grenzschichtsteuerung mit einem düsenartig geformten Zwischenraum und eine Enteisungsvorrichtung, die an einer Vorderkante eines Flugzeugflügels ausgebildet sind.

### ZUSAMMENFASSUNG DER ERFINDUNG

Ein zu dem Tragflügel auszubildender Spalt ist zur Steigerung des aerodynamischen Wirkungsgrads kontinuierlich konvergent. Erfolgt bei bekannten Hochauftriebssystemen mit Spalt bildenden Auftriebsklappen die Positionierung nicht maßgeblich durch aerodynamische Anforderungen sondern andere nicht aerodynamische Randbedingungen, wie etwa durch kinematische Randbedingungen oder durch eine vorgegebene Bauraumverteilung von in einem vorderen Flügelbereich angeordneten Komponenten, so kann es zu einer aerodynamisch eher ungünstigen Positionierung bzw. Ausrichtung der Auftriebsklappe in einem ausgefahrenen Zustand kommen. Der Verlauf des zu einer Flügelvorderkante gerichteten Spalts könnte dann zunächst bis zu einem Mindestspaltmaß konvergent sein, jedoch stromabwärts gesehen einen divergenten Spaltabschluss aufweisen, der eine bereits durch den Spalt beschleunigte Strömung wieder verlangsamt, so dass sich die mögliche Wirkung des Spalts nicht voll entfalten kann.

Es ist daher als eine Aufgabe der Erfindung anzusehen, ein Hochauftriebssystem mit mindestens einer an einem Tragflügel angeordneten Auftriebsklappe und mindestens einer Klappen-Verstellmechanik zum Bewegen der Auftriebsklappe zwischen einer eingefahrenen und mindestens einer ausgefahrenen Stellung gegenüber dem Tragflügel anzugeben, das eine aerodynamische Verbesserung bietet und den durch die Auftriebsklappe hervorgerufenen Effekt der Verschiebung des Strömungsabrisses auf der Profiloberseite des Tragflügels zu größeren Anstellwinkeln verbessert.

Gelöst wird die Aufgabe durch ein Hochauftriebssystem mit den Merkmalen des Anspruchs 1.

Gemäß einer Ausführungsform der Erfindung wird ein Hochauftriebssystem mit einer Auftriebsklappe mit einer Auftriebsklappenvorderkante und einer Auftriebsklappenhinterkante angegeben, die derart geformt ist, dass sie in eine Vertiefung des Tragflügels in einen Vorderkanten nahen Bereich bündig untergebracht werden kann, um dort den Tragflügel bündig zu ergänzen, wobei die Vertiefung eine Vertiefungsvorderkante und eine Vertiefungshinterkante aufweist. Die Vertiefung an dem Tragflügel ist derart angeordnet, dass die Auftriebsklappenhinterkante in einem verstauten Zustand zur Vertiefungsvorderkante gerichtet ist.

Gemäß der Erfindung ist es vorgesehen, dass die Vertiefungsvorderkante derart in einem Bereich der Vorderkante des Tragflügels positioniert ist, dass die Vertiefung im Bereich der Vertiefungsvorderkante eine solche Krümmung aufweist, dass die korrespondierend geformte Auftriebsklappe dazu eingerichtet ist, in ausgefahrenen Positionen der Auftriebsklappe einen Spalt zur Vorderkante des Tragflügels auszubilden, der stromabwärts gesehen kontinuierlich eine Verjüngung erfährt.

Eine Auftriebsklappe im Sinne der Erfindung ist steif und kann auf herkömmliche Weise mit einer versteifenden Innenstruktur ausgestattet werden, wobei im Wesentlichen die Positionierung der Vertiefung an dem Tragflügel für die resultierende Krümmung der Auftriebsklappe und damit den Verlauf des Spalts zwischen der Auftriebsklappe und dem Tragflügel bestimmend ist. Es sind keine zusätzlichen konstruktiven Merkmale an dem an sich bekannten Verstellmechanismus oder der Auftriebsklappe erforderlich, um die Spaltgeometrie zu optimieren.

Dieses ganzheitliche Konzept beschränkt sich in seinen Auswirkungen allerdings nicht lediglich auf die Gestaltung einer Vertiefung beispielsweise an einer Unterseite eines Tragflügels, sondern durch die Variation der Position der Vertiefung im Vergleich zu herkömmlichen Hochauftriebssystemen kann es mitunter erforderlich sein, zusätzliche Einbauten im Bereich der Vorderkante des Tragflügels zu verschieben, so lange der üblicherweise der nicht beeinträchtigte Bauraum solcher Einbauten durch einen Versatz der Vertiefung in Mitleidenschaft gezogen werden sollte.

Ein sekundärer positiver Effekt einer durch das erfindungsgemäße Hochauftriebssystem bereitgestellten Auftriebsklappe liegt darin, dass die Wölbung der Auftriebsklappe durch die stärkere Krümmung an der Auftriebsklappenhinterkante größer als bei bekannten Auftriebsklappen ist, so dass dadurch die Zirkulation und der aerodynamische Wirkungsgrad im Vergleich zu konventionellen Hochauftriebssystemen verbessert wird.

Allgemein werden willkürliche Positionen x entlang einer Sehne des Profils eines Tragflügels mit einer Profilsehnenlänge c durch ein Verhältnis x/c angegeben. Die Tragflügelvorderkante wird durch ein Verhältnis von x/c=0% repräsentiert, die Tragflügelhinterkante durch ein Verhältnis von x/c=100%.

Gemäß der Erfindung ist die Vertiefungsvorderkante bei einer Position des Tragflügels angeordnet, die in einem Bereich von x/c=0,5% bis x/c=2% liegt. Die Krümmung des Vorderkanten nahen Bereichs des Tragflügels ist dort üblicherweise so ausgeprägt, dass die Vertiefung und damit der Bereich um die korrespondierend geformte Hinterkante der Auftriebsklappe eine zur Schaffung eines konvergenten Spalts notwendige Form besitzt.

Gemäß einer Ausführungsform der Erfindung ist die Vertiefung an dem Tragflügel derart gestaltet, dass die örtliche Tangente der Profilskelettlinie an der korrespondierend geformten Auftriebsklappenhinterkante um einen Winkel von 5-30° schräg zu der Profilsehne der Auftriebsklappe steht. Mit anderen Worten befindet sich die Vertiefung in einem vorderen Bereich des Tragflügels, der bereits eine so deutliche Krümmung aufweist, dass die Auftriebsklappe eine zur Herstellung eines durchgängig konvergenten Spalts eingerichtet ist.

In einer exemplarischen Ausführungsform der Erfindung ist die Vertiefung derart geformt, dass die korrespondierend ausgebildete Auftriebsklappe in einem Hinterkanten nahen Bereich in einem Abschnitt von 5-25% der Profillänge der Auftriebsklappe eine Krümmung von 5-20° aufweist.

Die Aufgabe wird ferner durch ein Flugzeug mit einem vorgenannten Hochauftriebssystem gedeckt.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1 zeigt einen seitlichen Schnitt eines Hochauftriebssystems gemäß dem Stand der Technik mit einer Auftriebsklappe in einer ausgefahrenen und in einer eingefahrenen Stellung.
Fig. 2a zeigt eine Zusammenstellung eines erfindungsgemäßen Hochauftriebssystems mit einer Auftriebsklappe und zwei Auftriebsklappen, die nicht Teil der Erfindung sind, in drei unterschiedlichen eingefahrenen Stellungen und den daraus resultierenden Spaltgeometrien in den korrespondierenden ausgefahrenen Stellungen.
Fig. 2b zeigt mögliche Zusammenhänge zwischen örtlichen Tangenten einer Profilskelettlinie und einer Profilsehne.
Fig. 3 zeigt ein weiteres Ausführungsbeispiel eines erfindungsgemäßen Hochauftriebssystems.
Fig. 4 zeigt ein Flugzeug mit mindestens einem erfindungsgemäßen Hochauftriebssystem.

### DETAILLIERTE DARSTELLUNG EXEMPLARISCHER AUSFÜHRUNGSFORMEN

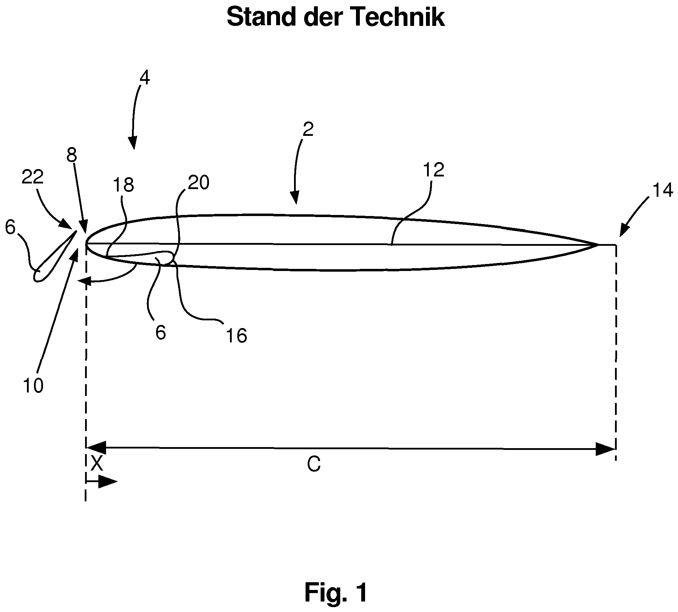

Fig. 1 zeigt einen Tragflügel 2 gemäß dem Stand der Technik, der mit einem Hochauftriebssystem 4 ausgestattet ist, welches beispielhaft aus einer Auftriebsklappe 6 besteht, die sich zu einer Vorderkante 8 des Tragflügels 2 beabstandet stromaufwärts des Tragflügels 2 positionieren lässt. Durch diese Positionierung entsteht ein Spalt 10 zwischen der Auftriebsklappe 6 und der Vorderkante 8, der für eine Zufuhr energiereicher Luftströmung auf eine Oberseite des Profils der Tragfläche 2 sorgt, um dort einen Strömungsabriss zu verzögern und dadurch höhere Anstellwinkel und größere Auftriebsbeiwerte zu erlauben.
Die Profillänge der Tragflügels 2 wird üblicherweise mit dem Parameter c bezeichnet. Eine Entfernung von der Vorderkante 8 des Tragflügels 2 entlang einer Profilsehne 12 wird üblicherweise mit dem Parameter x bezeichnet. An der Hinterkante 14 des Tragflügels 2 ist das Verhältnis x/c=100%, während an der Vorderkante 8 ein Verhältnis x/c von 0% vorliegt.

Die Auftriebsklappe 6 ist in einer eingefahrenen Position in einer Vertiefung 16 angeordnet, die korrespondierend mit der Auftriebsklappe 6 geformt ist. Die Vertiefung 16 weist eine Vertiefungsvorderkante 18 und eine Vertiefungshinterkante 20 auf. Gemäß dem Stand der Technik ist die Vertiefungsvorderkante in einem Bereich angeordnet, der ein Verhältnis x/c von ungefähr grösser gleich 2,5% (x/c ≥ 2.5%) aufweist. Dadurch ist die Krümmung im Bereich einer Hinterkante 22 der korrespondierend geformten Auftriebsklappe 6 so gering ausgeprägt, dass der Spalt 10 zwischen der Auftriebsklappe 6 und der Vorderkante 8 des Tragflügels 2 im Stand der Technik unter ungünstigen Randbedingungen nicht ausschließlich konvergent ist, sondern im Bereich der Hinterkante 22 der Auftriebsklappe 6 eine ausgeprägte Divergenz aufweist.

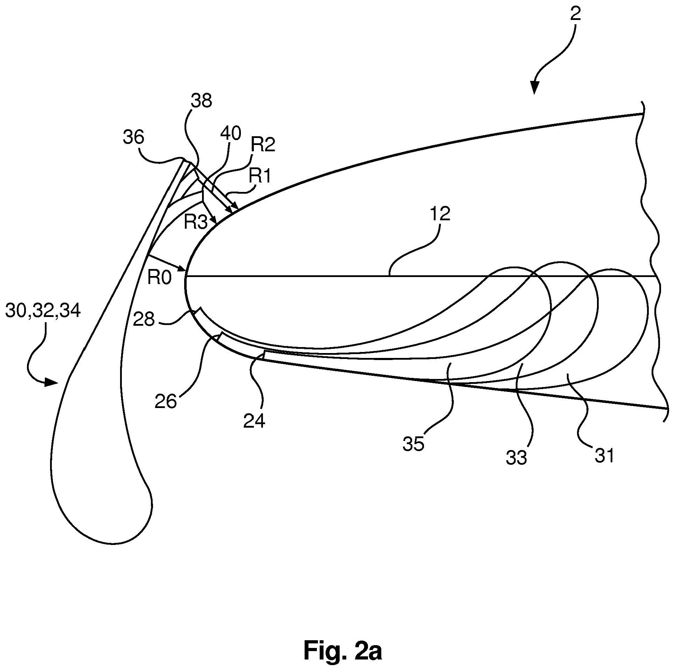

Fig. 2a veranschaulicht, wie durch eine Verschiebung einer Vertiefungsvorderkante 24, 26 und 28 Vertiefungen 31, 33 und 35 entstehen, die zu Auftriebsklappe 30, 32 und 34 mit deutlicherer Krümmung im Bereich ihrer Hinterkanten 36, 38 und 40 führen. Die daraus resultierenden Spaltgeometrien werden mit zunehmender Verschiebung der Vertiefungsvorderkanten 24, 26 und 28 in den Bereich der Vorderkante 8 zunehmend verbessert, da hierdurch die Spaltdivergenz verringert bzw. vollständig eliminiert wird, wie durch die sich verringernden Spaltgrößen R1, R2 und R3 ersichtlich. Die Spaltgröße R1 könnte beispielsweise den Stand der Technik repräsentieren, während R3 mit einem erfindungsgemäßen Hochauftriebssystem erreicht wird. Die zu der Vorderkante 8 am nächsten angeordnete Vertiefung 35 führt zu einer korrespondierend geformten Auftriebsklappe 34, die im ausgefahrenen Zustand eine kleinstmögliche Spaltgröße R3 aufweist, welche geringer als das Mindestspaltmaß R0 aus dem Stand der Technik ist.

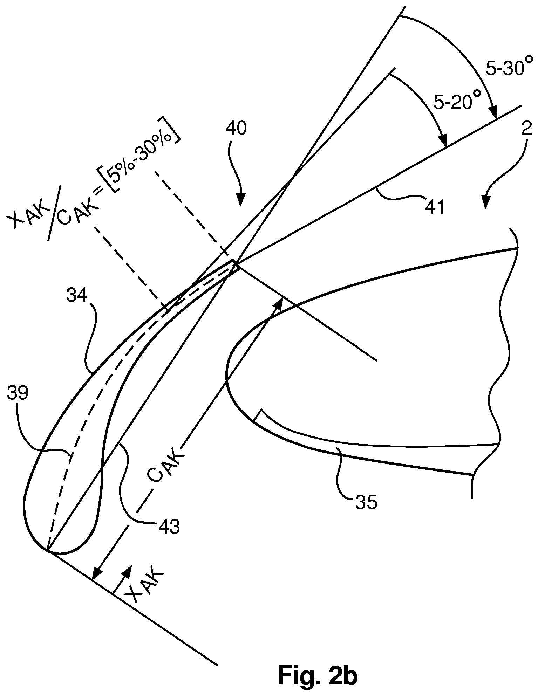

Fig. 2b zeigt exemplarisch und nicht maßstäblich die Auftriebsklappe 34 mit einer gekrümmten Hinterkante 40. Das Profil der Auftriebsklappe weist analog zu den Bezeichnungen des Tragflügels 2 eine Profiltiefe c_{AK} auf, wobei eine Parameter x_{AK} eine Position entlang einer Profilsehne definieren kann. Die relative Positionierung kann durch den Quotienten x_{AK}/c_{AK} angegeben werden.
Innerhalb des Profilquerschnitts der Auftriebsklappe 34 wird eine Skelettlinie 39 definiert, die genau zwischen der Ober- und Unterseite des Profils liegt. Die Skelettlinie 39 weist im Bereich der Hinterkante 40 mit x_{AK}/c_{AK}=100% eine Tangente 41 auf, die zu eine Profilsehne 43 der Auftriebsklappe 34 winklig verläuft.

Der von der Profilsehne 43 und der hintersten Tangente 41 der Skelettlinie 39 eingeschlossene Winkel liegt bevorzugt im Bereich von 5-30°.

Es erscheint besonders sinnvoll, zur Bildung des durchgängig divergenten Spalts 10 einen Hinterkanten nahen Bereich der Auftriebsklappe 34 mit x_{AK}/c_{AK}≥ x_{AKk}/c_{AK} besonders deutlich zu krümmen, wobei x_{AKk}/c in einem Bereich von 75% bis 95% liegen könnte. Besonders vorteilhaft könnte x_{AKk}/c_{AK} bei ungefähr 12,5% liegen. Bevorzugt ist dieser Hinterkanten nahe Bereich so gekrümmt, dass die örtliche Tangente der Skelettlinie 39 bei x_{AK}/c_{AK}=100% um einen Betrag von 5°-15° und besonders bevorzugt von 10° zu der örtlichen Tangente der Skelettlinie 39 bei x_{AKk}/c_{AK} abgewinkelt verläuft.

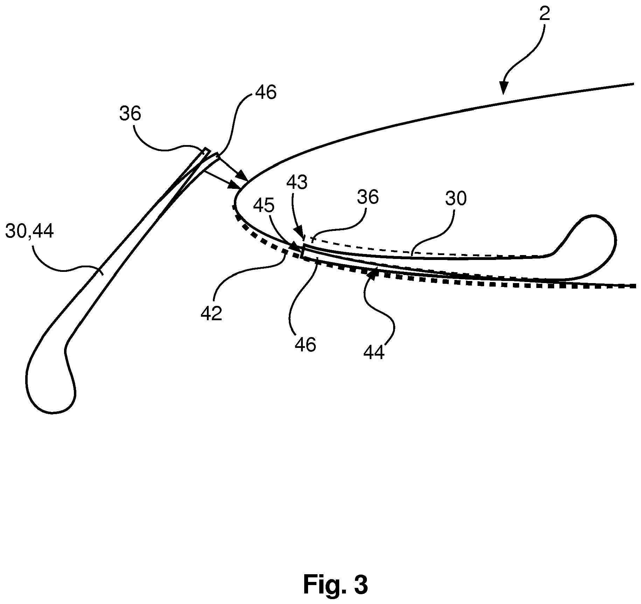

Dieser Effekt kann, wie in Fig. 3 gezeigt, durch eine Verdickung 42 des Profils des Tragflügels 2 noch etwas verbessert werden, ohne die Auftriebsklappen 30, 32 oder 34 zu weit in Richtung der Vorderkante 8 des Tragflügels 2 verschieben zu müssen. Durch eine gezielte Verdickung können Vertiefungsvorderkanten 45 bzw. 43 in ihrer Lage von der Profilsehne variiert werden, so dass eine Auftriebsklappe 44 etwas schiefwinkliger in einer Vertiefung angeordnet werden kann, was zu einer Erhöhung der Krümmung im Bereich einer Hinterkante 46 führt.

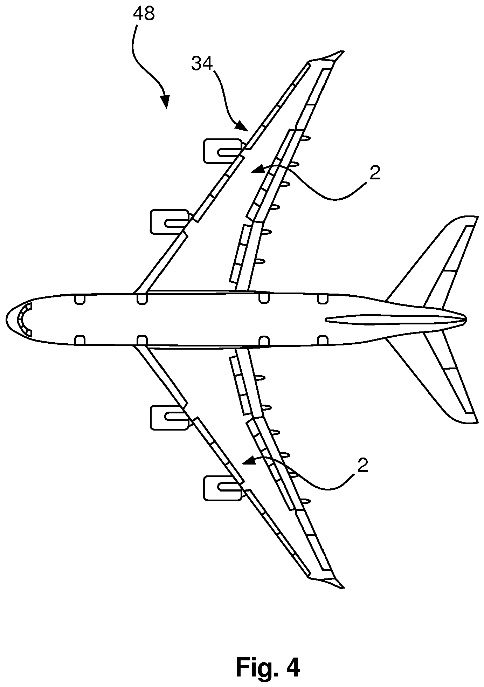

Schließlich zeigt Fig. 4 ein Flugzeug 48 mit mindestens einem Hochauftriebssystem nach den vorhergehend geschilderten Merkmalen, das mindestens eine in Fig. 4 verdeckte Auftriebsklappe 34 umfasst.

Ergänzend sei daraufhinzuweisen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN:

- 2: Tragflügel
- 4: Hochauftriebssystem
- 6: Auftriebsklappe
- 8: Vorderkante
- 10: Spalt
- 12: Profilsehne
- 14: Hinterkante
- 16: Vertiefung
- 18: Vertiefungsvorderkante
- 20: Vertiefungshinterkante
- 22: Hinterkante
- 24: Vertiefungsvorderkante
- 26: Vertiefungsvorderkante
- 28: Vertiefungsvorderkante
- 30: Auftriebsklappe
- 31: Vertiefung
- 32: Auftriebsklappe
- 33: Vertiefung
- 34: Auftriebsklappe
- 35: Vertiefung
- 36: Hinterkante
- 3: 8 Hinterkante
- 39: Skelettlinie
- 40: Hinterkante
- 41: Tangente
- 42: Verdickung
- 43: Vertiefungsvorderkante
- 44: Auftriebsklappe
- 45: Vertiefungsvorderkante
- 46: Hinterkante
- 48: Flugzeug

- x/c: Relative Position an einem Tragflügel
- x_{AK}/c_{AK}: Relative Position an einer Auftriebsklappe

## Patentansprüche

1. Hochauftriebssystem für ein Flugzeug, aufweisend
- mindestens eine an einem Tragflügel (2) angeordnete Auftriebsklappe (30, 32, 34, 44) zum Bilden eines Spalts zwischen einer Vorderkante des Tragflügels (2) und einer Hinterkante (36, 38, 40, 46) der Auftriebsklappe (30, 32, 34, 44) in einer ausgefahrenen Stellung der Auftriebsklappe (30, 32, 34, 44);
- mindestens eine Klappen-Verstellmechanik zum Bewegen der Auftriebsklappe (30, 32, 34, 44) zwischen einer eingefahrenen und mindestens einer ausgefahrenen Stellung gegenüber dem Tragflügel (2),
wobei der Tragflügel (2) eine Vertiefung (31, 33, 35) mit einer Vertiefungsvorderkante (24, 26, 28, 43, 45) zum Aufnehmen der Auftriebsklappe in einer eingefahrenen Stellung aufweist, **dadurch gekennzeichnet, dass** die Vertiefungsvorderkante (24, 26, 28, 43, 45) in einem Abstand von 0,5 bis 2% der Profiltiefe des Tragflügels (2) von der Vorderkante angeordnet ist, und die Vertiefung (31, 33, 35) im Bereich der Vertiefungsvorderkante (24, 26, 28, 43, 45) eine solche Krümmung aufweist, dass ein korrespondierend geformter Bereich nahe der Hinterkante (36, 38, 40, 46) der Auftriebsklappe (30, 32, 34, 44) dazu eingerichtet ist, in der ausgefahrenen Stellung der Auftriebsklappe (30, 32, 34, 44) einen Spalt zur Vorderkante des Tragflügels auszubilden, der stromabwärts gesehen kontinuierlich eine Verjüngung erfährt.

2. Hochauftriebssystem nach Anspruch 1,
**dadurch gekennzeichnet, dass** die Vertiefung (31, 33, 35) an dem Tragflügel (2) derart gestaltet ist, dass eine örtliche Tangente (41) einer Skelettlinie (39) der Auftriebsklappe an deren Hinterkante um einen Winkel von 5-30° schräg zu einer Profilsehne (43) der Auftriebsklappe (30, 32, 34, 44) steht.

3. Hochauftriebssystem nach Anspruch 2,
**dadurch gekennzeichnet, dass** die Vertiefung (31, 33, 35) an dem Tragflügel (2) derart gestaltet ist, dass in einem Bereich der korrespondierend geformten Auftriebsklappe (30, 32, 34, 44), der in einem Abstand von 5 bis 25% der Profiltiefe des Auftriebsklappe (30, 32, 34, 44) von der Vorderkante liegt, eine Tangente zu der Skelettlinie (39) einen Winkel mit einer Tangente (41) der Skelettlinie (39) an der Hinterkante der korrespondierend geformten Auftriebsklappe (30, 32, 34, 44) von 5-20° einschließt.

4. Hochauftriebssystem nach einem der vorhergehenden Ansprüche,
**dadurch gekennzeichnet, dass** der Tragflügel (2) im Bereich der Vertiefungsvorderkante (24, 26, 28, 43, 45) eine Aufdickung (42) aufweist.

5. Flugzeug, aufweisend zwei Tragflügel (2) und ein an den Tragflügeln (2) angeordnetes Hochauftriebssystem nach Anspruch 1.

## Claims

1. A high lift system for an aircraft, comprising
- at least one lift flap (30, 32, 34, 44) arranged on a wing (2) to form a gap between a leading edge of the wing (2) and a trailing edge (36, 38, 40, 46) of the lift flap (30, 32, 34, 44) in an extended position of the lift flap (30, 32, 34, 44);
- at least one flap adjustment mechanism for moving the lift flap (30, 32, 34, 44) between a retracted and at least one extended position relative to the wing (2),
wherein the wing (2) comprises a depression (31, 33, 35) with a leading depression edge (24, 26, 28, 43, 45) for accommodating the lift flap in a retracted position,
**characterized in that**
the leading depression edge (24, 26, 28, 43, 45) is arranged in a distance from the leading edge of 0.5 to 2% of the profile depth of the wing (2), and
the depression (31, 33, 35) comprises such a curvature in the region of the leading depression edge (24, 26, 28, 43, 45), that a correspondingly shaped region near the trailing edge (36, 38, 40, 46) of the lift flap is adapted to create a gap to the leading edge of the wing, which is convergent in a downstream direction, in the extended position of the lift flat (30, 32, 34, 44).

2. The high lift system of claim 1,
**characterized in that** the depression (31, 33, 35) on the wing (2) is shaped in such a way that a local tangent (41) of a mean line (39) of the lift flap is inclined at an angle of 5-30° at its trailing edge relative to a profile chord (43) of the lift flap (30, 32, 34, 44).

3. The high lift system of claim 2,
**characterized in that** the depression (31, 33, 35) on the wing (2) is configured in such a way that, in an area of the correspondingly formed lift flap (30, 32, 34, 44) lying in a distance of 5 to 25% of the profile depth of the lift flap (30, 32, 34, 44) from the leading edge, a tangent to the mean line (39) includes an angle with a tangent (41) of the mean line (39) at the trailing edge of the correspondingly shaped lift flap (30, 32, 34, 44) that measures 5-20°.

4. The high lift system of one of the preceding claims,
**characterized in that** the wing (2) comprises a thickened segment (42) at least in the region of the leading depression edge (24, 26, 28, 43, 45).

5. An aircraft, comprising two wings (2) and a high lift system according to claim 1 arranged on the wings (2).

## Revendications

1. Système hypersustentateur pour un avion, présentant :
- au moins un volet de sustentation (30, 32, 34, 44) disposé sur une aile (2) pour former un interstice entre un bord avant de l'aile (2) et un bord arrière (36, 38, 40, 46) du volet de sustentation (30, 32, 34, 44) dans une position déployée du volet de sustentation (30, 32, 34, 44) ;
- au moins un mécanisme de déplacement de volets pour déplacer le volet de sustentation (30, 32, 34, 44) entre une position rentrée et au moins une position déployée par rapport à l'aile (2),
dans lequel l'aile (2) présente une concavité (31, 33, 35) avec un bord avant de concavité (24, 26, 28, 43, 45) pour recevoir le volet de sustentation dans une position rentrée,
**caractérisé en ce que**
le bord avant de concavité (24, 26, 28, 43, 45) est disposé à une distance de 0,5 à 2 % de la profondeur du profil de l'aile (2) du bord avant, et
la concavité (31, 33, 35) présente au niveau du bord avant de concavité (24, 26, 28, 43, 45) une courbure telle qu'une zone formée de manière correspondante à côté du bord arrière (36, 38, 40, 46) du volet de sustentation (30, 32, 34, 44) est aménagée pour, dans la position déployée du volet de sustentation (30, 32, 34, 44), réaliser un interstice par rapport au bord avant de l'aile et qui fait l'objet d'un rétrécissement de manière continue vue vers l'avant.

2. Système hypersustentateur selon la revendication 1, **caractérisé en ce que** la concavité (31, 33, 35) est réalisée sur l'aile (2) de telle sorte qu'une tangente localisée (41) d'une ligne médiane (39) du volet de sustentation sur son bord arrière forme un angle d'inclinaison de 5 à 30° par rapport à une corde profilée (43) du volet de sustentation (30, 32, 34, 44).

3. Système hypersustentateur selon la revendication 2, **caractérisé en ce que** la concavité (31, 33, 35) est réalisée sur l'aile (2) de telle sorte que, dans une zone du volet de sustentation (30, 32, 34, 44) formé de manière correspondante, qui est située à une distance de 5 à 25 % de la profondeur de profil du volet de sustentation (30, 32, 34, 44) par rapport au bord avant, une tangente par rapport à la ligne médiane (39) forme un angle de 5 à 20° avec une tangente (41) de la ligne médiane (39) sur le bord arrière du volet de sustentation (30, 32, 34, 44) formé de manière correspondante.

4. Système hypersustentateur selon une des revendications précédentes, **caractérisé en ce que** l'aile (2) présente un épaississement (42) au niveau du bord avant de concavité (24, 26, 28, 43, 45).

5. Avion, présentant deux ailes (2) et un système hypersustentateur disposé sur les ailes (2) selon la revendication 1.
